# EUROPÄISCHE PATENTANMELDUNG

(11) **EP 1 610 089 A2**
(43) Veröffentlichungstag der Anmeldung: **28.12.2005**
(21) Anmeldenummer: 05013341.2
(22) Anmeldetag: 21.06.2005
(51) Int. Cl.: G01B 11/26

(54) **Verfahren und Vorrichtung zur Messung von Winkeln optischer Oberflächen**

(30) Priorität: 21.06.2004 DE 202004009727 U
(71) Anmelder: Trioptics GmbH, 22880 Wedel (DE)
(72) Erfinder: Heinisch, Josef, 22880 Wedel (DE); Krey, Stefan, Dr., 20251 Hamburg (DE); Dumitrescu, Eugen, 22880 Wedel (DE)
(74) Vertreter: Biehl, Christian

(57) **Zusammenfassung**

Verfahren und Vorrichtung zur berührungslosen Messung von Winkeln oder Winkeländerungen mit hoher Ortsauflösung an spiegelnd reflektierenden Gegenständen, realisierend die Verfahrensschritte :
- Erzeugung kohärenter Laserlichtstrahlung mittels einer Laserlichtquelle **(10),**
- Fokussierung des Laserlichtstrahls auf engen Strahldurchmesser am Ort einer entfernten reflektierenden Fläche (20), die der zu messenden Winkeländerung unterworfen ist, mit Hilfe eines optischen Systems zur Strahlformung **(18),**
- Abbilden des reflektierten Laserlichtes auf der Sensorfläche (16) durch ein optisches System (14),
- Erfassen des Laserlichtflecks auf der Sensorfläche (16),
- Ermitteln der Lage des Laserlichtflecks relativ zu einer Bezugslage,
- Bestimmung des Meßwertes der Winkeländerung α anhand der Lageveränderung des Lichtflecks relativ zur Bezugslage.

## Beschreibung

Die Erfindung betrifft eine Verfahren zur berührungslosen Messung von Winkeln od er Winkeländerungen mit hoher Ortsauflösung insbesondere an spiegelnd reflektierenden Gegenständen oder anderen optischen Oberflächen mit den Merkmalen des Oberbegriffs des Hauptanspruches.

Zur Winkelmessung werden bisher Autokollimationsfernrohre seit vielen Jahren für die hochpräzise berührungslose Winkelmessung an optisch reflektierenden Prüflingen eingesetzt. Ein Autokollimationsfernrohr besteht aus einem gut korrigiertem Objektiv in dessen Brennebene f sich sowohl eine beleuchtete Strichplatte als auch ein Sensor befinden. Beide sind über Strahlteilung räumlich voneinander getrennt. Diese Strahlteilung kann sowehl optisch über einen Strahlteilerwürfel als auch geometrisch erfolgen. Licht, welches von der beleuchteten Strichplatte ausgeht, verlässt das Objektiv mit parallelem Strahlenverlauf.

Wird das Licht von einer spiegelnden Oberfläche zurück in das Objektiv reflektiert, so wird die Strichplatte auf den 2D-Sensor abgebildet. Eine Winkelverkippung α des Prüflingsspiegels wird in eine proportionale Verschiebung d des Strichplattenbildes umgesetzt, wobei der Zusammenhang d = 2αf besteht. Der 2D-Sensor nimmt die Verschiebung d in zwei zueinander senkrechten Richtungen X,Y auf. Der Sensor kann z.B. eine CCD- oder CMOS-Kamera oder eine positionsempfindliche Diode (PSD) sein.

Ein Nachteil dieser Anordnung besteht in der geringen Ortsauflösung der Messung, da der Lichtstrahl auf den Objektivdurchmesser aufgeweitet wird.

Als Stand der Technik sind zu nennen insbesondere die DE 103 27 939 A1, aus der bereits die berührungslose Messung von Winkeln an Gegenständen bekannt ist, ein klassischer Autokollimator mit weitem kollimierten Strahlenbündel, die US 5,046,843 A die bereits einen kollimierten Lichtstrahl auf einen nicht symmetrischen Spiegel an einem Körper schickt, dessen Orientierung zu untersuchen ist, und die JP 62-017 607A zu nennen, die ein optisches Neigungswinkelinstrument beschreibt. In all diesen Vorrichtungen ist jedoch nicht ein Meßfleck im Mikrometerbereich untersuchbar, sondern es wird über einen großen Bereich gemittelt.

Weiter ist die EP 0 227 136 A1, die eine Höhe eine Flächenprofils mit einem sog. Profilometer erfaßt, zu nennen. Neben einer anderen Aufgabe, die der Vorrichtung gestellt ist nutzt sie auch ein anderes Funktionsprinzip.

Die Erfindung hat sich zur Aufgabe gestellt, diesen Nachteil zu beheben. Erfindungsgemäß wird dies durch den Aufbau nach dem Hauptanspruch behoben. Die Unteransprüche geben vorteilhafte Ausführungsformen wieder.

Der erfindungsgemäß als Einstrahl-Autokollimator bezeichnete Aufbau besteht aus einem Laser, einem Strahlteiler, einem das vom Laser durch den Strahlteiler gesandte Licht auf die Prüflingsoberfläche fokussierenden Objektiv, einem vom Strahlteiler mit dem von der Prüflingsoberfläche reflektierten Laserlicht bestrahlten 2D-Sensor, und einer Rechnereinheit, die aus der Verschiebung des auf dem 2D-Sensor erfaßten Lichts eine Winkelinformation der bestrahlten optischen Oberfläche errechnet Durch die eingesetzte Strahlformung wird ein Autokollimator mit engem Stahldurchmesser ermöglicht, so daß scannend über die zu untersuchende Topgraphie gemessen werden kann.

Der 2D-Sensor kann durch ein CCD, eine CMOS Kamera oder eine positionsempfindlione Diode gebildet werden.

Der Strahlteiler kann in einer zweiten Ausführung im Strahlengang sowohl des reflektierten wie des eingestrahlten Lichts vor dem Objektiv angeordnet sein, und die Prüflingsoberfläche und das Objektiv auf gegenüberliegenden Seiten des Strahlteilers jeweils mit einem Teilstrahl des noch unfokussierten Laserlichts beaufschlagt werden.

Schließlich kann eine den Laserlichtstrahl mit definiertem Stahldurchmesser für einen Teilbereich der Prüflingsoberfläche formende Strahlformungsoptik zwischen Laser und Strahlteiler vorgesehen werden.

Weitere Merkmale und Vorteile der Erfindung ergeben sich aus den nachfolgenden Zeic h-nungen. Dabei zeigt :
- Fig. 1: die erfindungsgemäße Vorrichtung nach einem ersten Ausführungsbeispiel,
- Fig. 2: den klassischen Autokollimator,
- Fig. 3: die erfindungsgemäße Vorrichtung nach einem zweiten Ausführungsbeispiel, und
- Fig. 4: die erfindungsgemäße Vorrichtung nach einem dritten Ausführungsbeispiel.

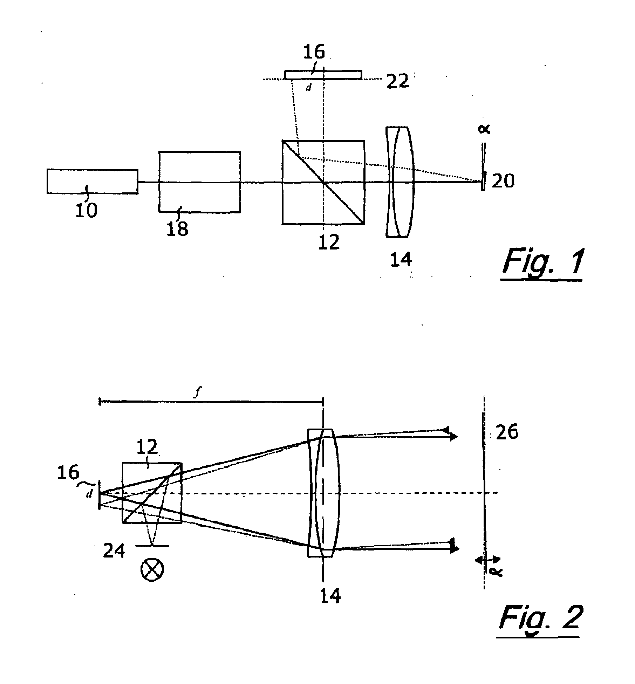

Das Prinzip ist in Fig. 2 dargestellt. Ein Autokollimationsfernrohr besteht aus einem gut korrigierten Objektiv **14** in dessen hinterer Brennebene im Abstand *f* sich sowohl eine beleuchtete Strichplatte **24** als auch ein Positionssensor **16** befinden. Beide sind über Strahlteilung z.B. mit einem Strahlteilerwürfel **12** räumlich voneinander getrennt. Licht, welches von der beleuchteten Strichplatte ausgeht und auf das Objektiv fällt, verlässt das Objektiv mit parallelem (telezentrischen) Strahlenverlauf. Dabei wird der gesamte Objektivdurchmesser D vom Licht erfüllt.

Wird dieses Licht von einer spiegelnden Oberfläche **20** zurück in das Objektiv **14** reflektiert, so wird ein Bild der Strichplatte auf dem Positionssensor **16** abgebildet. Eine Winkeländerung α des Prüflings wird in eine proportionale Verschiebung *d* des Strichplattenbildes umgesetzt, wobei der Zusammenhang *d*=2α*f* besteht. Üblicherweise registriert der Positionssensor **7** als 2-dimensionaler (2D)-Sensor diese Verschiebung in zwei zueinander senkrechten Richtungen (X, Y).

Ein Nachteil dieser Anordnung besteht in der geringen Ortsauflösung der Messung, die durch die flächenhafte Beleuchtung des Prüflings mit dem zum Objektivdurchmesser D aufgeweiteten Lichtbündel gegeben ist. Zur mikroskopischen Untersuchung mit hoher Ortsauflösung von Winkeln an spiegelnden Oberflächen ist eine solche Anordnung demzufolge nicht geeignet.

Bei dem erfindungsgemäßen Verfahren nach **Fig. 1** wird nun ein enger, kohärenter Laserstrahl **5** verwendet, welcher von einer Laserstrahlungsquelle **10** ausgeht, und welcher von einer geeignet dimensionierten Strahlformungsoptik **12** derart modifiziert wird, daß der Laserstrahl am Ort **26** auf der Prüflingsoberfläche zu einem sehr kleinen Taillendurchmesser fokussiert ist.

Der fokussierte Laserstrahl wird zunächst an einer der Winkeländerung unterworfenen spiegelnden Fläche **20** zurück in das Objektiv **14** reflektiert und danach über die Strahlteilung **12** auf den 2D-Sensor **16** gelenkt, der sich im Abstand der hinteren Brennebene des Objektivs **14** befindet und wo er als Lichtfleck registriert wird.

Der 2D-Sensor **16** registriert in zwei Dimensionen (X, Y) bezogen auf eine Bezugslage Betrag und Richtung der lateralen Verschiebung *d* des Lichtflecks, welche proportional zu der Winkelveränderung α der zu messenden Prüflingsoberfläche ist. Eine Rechnereinheit ermittelt diese laterale Verschiebung *d* und errechnet daraus die Neigung der Prüflingsoberfläche am Messort.

Bei dieser erfindungsgemäßen Art der Ausführung liegt der wesentliche Vorteil darin, daß der für kleinräumige Untersuchungen problematische große Strahldurchmesser beim normalen Autokollimationsfernrohr (**Fig. 2**) durch einen engen und fokussierten Laserstrahl ersetzt wird.

Aufgrund der kohärenten Eigenschaften des Laserlichtes läßt sich dabei der Laserstrahl vorstellen als einzelner Lichtstrahl, herausgelöst aus dem weiten Lichtbündel des klassischen Autokollimationsfernrohres. Die Fokussiereigenschaften des Laserlichtes ermög i-chen einen sehr kleine Strahldurchmesser am Meßort 26 bei gleichzeitig ausreichender Lichtintensität am Ort des Sensors **16**. Es wird ein sehr kleinräumiges Abtasten der zu messenden Oberfläche im Mikrometerbereich möglich.

Das erfindungsgemäße Verfahren ermöglicht somit eine mikroskopische Analyse von Neigungsänderungen auf Prüflingsoberflächen, indem die Meßvorrichtung mit geeignet präzisen Führungselementen relativ zum Prüfling bewegt wird, bzw. umgekehrt der Prüfling relativ zur Meßvorrichtung bewegt wird.

Weiterhin kann das so gewonnene Neigungsprofil der Prüflingsoberfläche durch eine Recheneinheit numerisch integriert werden und somit das Höhenprofil bzw. die Form der Prüflingsoberfläche ermittelt werden.

Die Meßvorrichtung zur berührungslosen Messung von Winkeln oder Winkeländerung en mit hoher Ortsauflösung an spiegelnd reflektierenden Gegenständen **20** besteht aus einer Laser-Strahlungsquelle **10** zur Erzeugung eines engen Laserlichtstrahls, einer nachgeschalteten Strahlformungsoptik **18,** einem darauf folgendem Strahlteilungssystem **12** und einem fokussierenden Objektiv **14,** die jeweils vom Laserlichtstrahl durchleuchtet werden, einem spiegelnd reflektierenden Meßelement **16,** welches in einer vorgegebenen Meßentfemung der zu messenden Winkeländerung α unterworfen wird, einem ortsauf ösenden optoelektronischen 2D-Sensor **16,** welcher sich im Abstand der hinteren Brennebene des Objektivs **14** befindet und auf den das vom Meßelement **16** rückreflektierte Laserlicht vom Objektiv **14** projiziert wird, und eine nachgeschaltete Recheneinheit, wobei die Recheneinheit die Lageverschiebung *d* des projizierten Lichtflecks auf dem Sensor relativ zu einer Bezugslage ermittelt und daraus den Meßwert der Winkeländerung α berechnet.
Die Strahlformungsoptik **18** ist ein optisches System aus einer oder mehrerer Linsen, die den aus dem Laser austretende Lichtstrahl derart formt, daß er, unter Berücksichtigung der optischen Eigenschaften des Objektivs, am Meßort zu einem kleinen Strahldurchmesser fokussiert wird.

Der optoelektronische 2D-Sensor **16** kann durch eine CCD- (charge coupled device), eine CMOS- (complementary metal oxide semiconductor) Kamera, ein PSD (position sensitive detector), eine Quadrantendiode, oder jeder andere 2-dimensional ortsempfindliche optoelektronische Sensor sein.

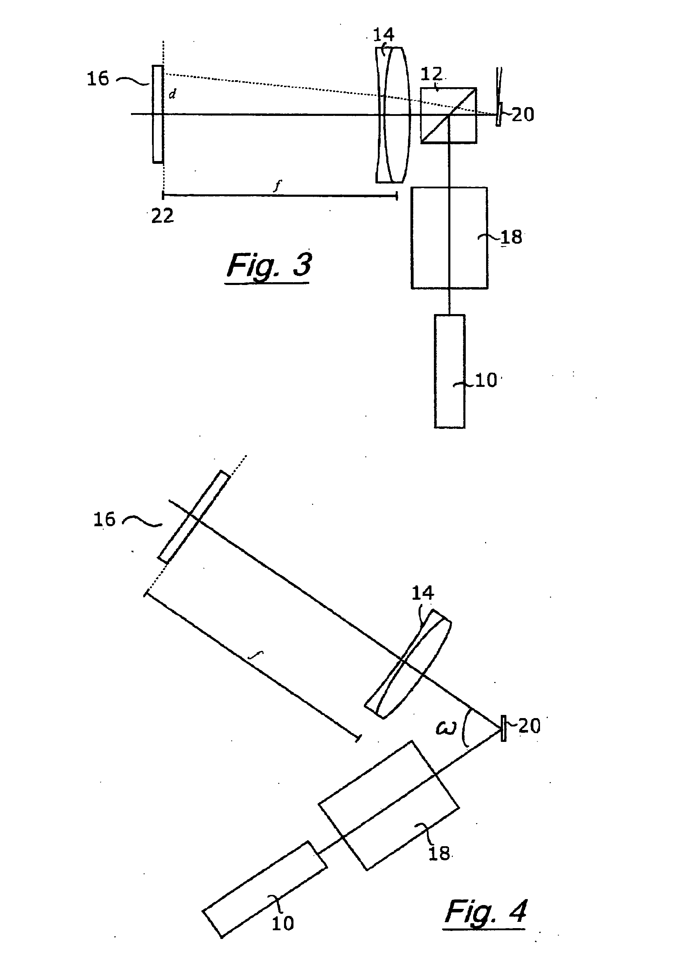

Das Strahlteilungssystem **18** kann sowohl optisch **(Fig. 1** und **Fig. 3)** als auch geometrisch ausgeführt **(Fig. 4)** sein. Bei optischer Strahlteilung kann die Strahlteilung über einen Strahlteilerwürfel **12,** eine Teilerplatte oder eine andere geeignete Prismenanordnung erfolgen. Bei geometrischer Strahlteilung **(Fig 4)** sind der einfallende Lichtstrahl und der vom Meßort **26** reflektierte Lichtstrahl über den gesamten Weg durch eine Winkelanordnung unter Winkel ω geometrisch voneinander getrennt.

Bei optischer Strahlteilung kann das Strahlteilungssystem **12** in einer zweiten Ausführung **(Fig. 3)** auch zwischen Objektiv **14** und Meßelement **20** angeordnet sein.

Ein besonderer Vorteil der Winkelmessung mit fokussiertem Meßstrahl liegt in der Möglichkeit, mikroskopisch kleine Objekte vermessen zu können, oder auch bei größeren Objekten, diese mit hoher Ortsauflösung vermessen zu können.

Weiterhin kann, anstatt die reflektierende Fläche den zu messenden Winkeländerungen z u unterwerfen, das Verfahren auch im umgekehrten Sinne eingesetzt werden, indem die Winkeländerung der Meßvorrichtung gegenüber einer feststehenden reflektierenden Fläche ermittelt wird.

Die Meßvorrichtung kann dazu eingesetzt werden, die lokale Neigung einer zu prüfenden spiegelnden Oberfläche als Funktion des Meßortes zu ermitteln, indem die Vorrichtung mit Hilfe präziser Führungselemente relativ zu der zu prüfenden Oberfläche geführt wird, oder indem die zu prüfende Oberfläche relativ zu der Meßvorrichtung bewegt wird. Die lokale Neigung wird als 2-dimensionate vektorielle Größe als Funktion des Meßortes ermittelt.

Die Meßvorrichtung kann dazu eingesetzt werden aus den Neigungswerten als Funktion des Meßortes das Höhenprofil, also die Form der Oberfläche, zu ermitteln. Hierzu werder die Neigungswerte mit Hilfe einer Recheneinheit numerisch integriert.

Insbesondere kann die Meßvorrichtung zur Messung von Formabweichungen von asphärischen optischen Oberflächen eingesetzt werden. Weiterhin kann die Vorrichtung auch zur Fertigungskontrolle eingesetzt werden in Fertigungsanlagen für spiegelnd reflektierende Oberflächen, indem die Meßvorrichtung mit denselben Verfahreinheiten relativ zur Oberfläche bewegt wird wie auch die Fertigungswerkzeuge für die Formgebung und Politur.

Außerdem kann die Vorrichtung als Nullsensor innerhalb einer geschlossenen Regelschleife für die Lageregelung von Positioniereinheiten verwendet werden.

In einer besonderen, praktischen Variante kann es sich als vorteilhaft erweisen, die Laserlichtquelle in ihrer Intensität zu modulieren und das Sensorsignal phasensynchron zu detektieren. Auf diese Weise kann das zu messende Signal aus Störlicht von der Umgebung herausgefiltert werden.

In Fig. 3 ist eine Variante des Einstrahl-Autokollimators, bei der der Strahlteiler 12 vor dem Messobjektiv 14 angeordnet ist (zwischen Prüfling 20 und Objektiv 14), dargestellt. Diese Variante hat den Vorteil, dass sich die Strahlformung für kleine Strahldurchmesser auf dem Prüfling 20 leichter realisieren lässt, da die optischen Eigenschaften des Objektivs 14 nicht berücksichtigt werden müssen.

## Patentansprüche

1. Vorrichtung zur Messung von Winkeln von optischen Oberflächen mit :
- einem Laser (**10**),
- einem Strahlteiler **(12),**
- eine den Laserlichtstrahl mit definiert engem Stahldurchmesser für einen Teilt e-reich der Prüflingsoberfläche **(20)** formende Strahlformungsoptik **(18)** zwischen Laser **(10)** und Strahlteiler **(12).**
- einem das vom Laser **(10)** durch den Strahlteiler **(12)** gesandte Licht auf die Prüflingsoberfläche fokussierenden Objektiv **(14),**
- einem vom Strahlteiler **(12)** mit dem von der Prüflingsoberfläche reflektierten Laserlicht bestrahlten 2D-Sensor **(16),** und
- einer aus der Verschiebung des auf dem 2D-Sensor **(16)** erfaßten Lichts eine Winkelinformation der bestrahlten optischen Oberfläche errechnenden Rechnereinheit.

2. Vorrichtung nach Anspruch 1, **dadurch gekennzeichnet, daß** sich der Sensor **(16)** im Abstand der Brennebene des Objektivs **(14)** befindet

3. Vorrichtung nach Anspruch 1, **dadurch gekennzeichnet, daß** der Sensor **(16)** zur Lagebestimmung des Lichtflecks in zwei Dimensionen (X, Y) flächig ist.

4. Verfahren zur berührungslosen Messung von Winkeln oder Winkeländerungen mit hoher Ortsauflösung an spiegelnd reflektierenden Gegenständen, **gekennzeichnet durch** folgende Verfahrensschritte:
- Erzeugung kohärenter Laserlichtstrahlung mittels einer Laserlichtquelle **(10),**
- Fokussierung des Laserlichtstrahls auf engen Strahldurchmesser am Ort einer entfernten reflektierenden Fläche **(20),** die der zu messenden Winkeländerung unterworfen ist, mit Hilfe eines optischen Systems zur Strahlformung **(18),**
- Abbilden des reflektierten Laserlichtes auf der Sensorfläche **(16) durch** ein optisches System **(14)**,
- Erfassen des Laserlichtflecks auf der Sensorfläche **(16),**
- Ermitteln der Lage des Laserlichtflecks relativ zu einer Bezugslage,
- Bestimmung des Meßwertes der Winkeländerung α anhand der Lageveränderung des Lichtflecks relativ zur Bezugslage.

5. Verfahren nach Anspruch 4, **dadurch gekennzeichnet, daß** eine Strahlteilung **(12)** zwischen ausgesandtem und empfangenem Licht erfolgt.

6. Verfahren nach einem der Ansprüche 4 oder 5, **dadurch gekennzeichnet, daß** eine optische Strahlteilung zwischen Objektiv **(14)** und Sensor **(16)** erfolgt.

7. Verfahren nach einem der Ansprüche 4 bis 6, **dadurch gekennzeichnet, daß** eine optische Strahlteilung zwischen Objektiv **(14)** und Meßort **(26)** erfolgt.

8. Verfahren nach einem der Ansprüche 4 bis 7, **dadurch gekennzeichnet, daß** eine geometrische Strahlteilung durch eine Winkelanordnung zwischen ausgesandtem Lichtstrahl und empfangenem Lichtstrahl erfolgt.

9. Verfahren nach einem der Ansprüche 4 bis 8, **dadurch gekennzeichnet, daß** aus den ermittelten Neigungswerten als Funktion des Meßortes durch numerische Integration nit Hilfe einer Recheneinheit die Oberflächenform bestimmt wird.

10. Verfahren nach einem der vorangehenden Ansprüche, **gekennzeichnet durch** Verfahren der Meßvorrichtung relativ zu der zu erfassenden Oberfläche.
